# EUROPÄISCHE PATENTANMELDUNG

(11) **EP 0 631 886 A1**
(43) Veröffentlichungstag der Anmeldung: **04.01.1995**
(21) Anmeldenummer: 94110259.2
(22) Anmeldetag: 01.07.1994
(51) Int. Cl.: B44C 1/22, C03C 19/00, B44B 3/06, B60R 13/10

(54) **Verfahren und Vorrichtung zur Diebstahlsicherung von Kraftfahrzeugen**

(30) Priorität: 01.07.1993 DE 4321854
(71) Anmelder: Stanzl, Klaus, D-57439 Attendorn (DE)
(72) Erfinder: Stanzl, Klaus, D-57439 Attendorn (DE)
(74) Vertreter: Jochem, Bernd, Dipl.-Wirtsch.-Ing.

(57) **Zusammenfassung**

Das Verfahren zur Diebstahlsicherung von Kraftfahrzeugen erfolgt durch Einschneiden einer Kennzeichnung in dessen Scheiben. Um die Festigkeit der Scheiben nicht zu beeinträchtigen, wird zunächst die Kennzeichnung, z. B. die Fahrgestellnummer, in eine flache Schablone (10), z. B. in Form eines 0,1 mm dicken Stahlbands, eingearbeitet. Dann wird die Kennzeichnung mit einem motorisch vibrierend angetriebenen Gravierstichel (18) durch die Schablone (10) hindurch in die Kraftfahrzeugscheiben eingraviert. Dabei wird die Tiefe der Gravur durch Anlage eines mit dem Gravierstichel (18) oder dessen Führung verbundenen Distanzglieds (14) gegen die Schablone (10) auf weniger als 0,1 mm begrenzt.

## Beschreibung

Die Erfindung betrifft ein Verfahren zur Diebstahlsicherung von Kraftfahrzeugen durch Einschneiden einer Kennzeichnung in die Scheiben sowie eine Vorrichtung zur Durchführung dieses Verfahrens.

Bisher werden solche Kennzeichnungen in die Scheiben eingefräst. Das Fräsverfahren bedingt jedoch eine bestimmte Tiefe und Breite der gefrästen Linien von jeweils etwa mindestens 0,5 bis 1 mm. Dadurch kann die Stabilität der Kraftfahrzeugscheiben gefährdet werden, die heute vielfach mit der Karosserie fest verklebt werden und auf diese Weise zur Versteifung der Karosserie herangezogen werden und entsprechende Belastungen aufnehmen müssen.

Der Erfindung liegt deshalb die Aufgabe zugrunde, ein Verfahren der eingangs genannten Art und eine zu dessen Durchführung geeignete Vorrichtung zu schaffen, welche ein einfaches Kennzeichnen der Scheiben mit wesentlich geringerer Beeinträchtigung von deren Festigkeit gewährleisten.

Vorstehende Aufgabe wird verfahrensmäßig dadurch gelöst, daß eine Schablone mit der Kennzeichnung hergestellt wird und diese mit einem motorisch vibrierend angetriebenen Gravierstichel durch die Schablone hindurch in die Kraftfahrzeugscheiben eingraviert wird, wobei die Tiefe der Gravur durch Anlage eines mit dem Gravierstichel oder mit dessen Führung verbundenen Distanzglieds gegen die Schablone auf weniger als 0,1 mm begrenzt wird. Vorzugsweise wird die Tiefe der Gravur sogar auf weniger als etwa 0,05 mm begrenzt, also auf etwa 1/10 der Eindringtiefe beim Fräsen. Im Gegensatz zu jenem bekannten Verfahren arbeitet ein vibrierender Gravierstichel auch bei solch einer geringen Tiefe einwandfrei. Die Scheibe wird dabei praktisch nicht verletzt, aber doch in einer Weise gekennzeichnet, daß jeder Versuch, die Markierung zu beseitigen, deutlich sichtbare Spuren hinterläßt.

Das neue Verfahren bietet darüber hinaus den Vorteil, daß es sich sehr einfach ausführen läßt, weil es Graviergeräte mit vibrierendem Stichel als kleine Handgeräte gibt, die sich unabhängig von den vielfältigen Formen der Kraftfahrzeugscheiben von Hand praktisch überall einsetzen lassen.

Besonders zu erwähnen ist auch der Vorteil, daß in der praktisch bevorzugten Ausführungsform die Schablone nicht nur zur Gestaltung der Gravur dient, sondern auch als Anschlag zur Begrenzung der Schnittiefe. Darüber hinaus wurde bei der Erfindung erkannt, daß es sich bereits lohnt, statt allgemeiner Zahlen- und/oder Buchstabenschablonen eine Schablone zu verwenden, welche die für ein bestimmtes Kraftfahrzeug vorgesehene Kennzeichnung enthält. Dadurch wird Irrtümern vorgebeugt, ohne daß die Kosten des Verfahrens unangemessen erhöht werden, denn eine spezielle Schablone je Kraftfahrzeug lohnt sich schon deshalb nicht, weil man mit ihr sämtliche Scheiben eines bestimmten Fahrzeugs kennzeichnen kann. Falls gewünscht, kann die Kennzeichnung darüber hinaus auch in wenigstens ein metallisches Teil des Kraftfahrzeugs eingraviert werden, wozu es nicht einmal erforderlich ist, den Gravierstichel zu wechseln.

Es dient der Erhöhung der Sicherheit, daß in weiterer bevorzugter Ausgestaltung der Erfindung die Schablone nach dem Gravieren der Scheiben zerstört wird. Man beugt damit Mißbrauch vor.

Die erfindungsgemäße Vorrichtung zur Durchführung des genannten Verfahrens ist dadurch gekennzeichnet, daß sie aus einem motorisch axial vibrierend antreibbaren Stichel, dessen Spitze über ein mit ihm oder seiner Führung verbundenes Distanzglied vorsteht, und einer mit dem Stichel zusammenwirkenden Schablone besteht, deren Dicke um die Graviertiefe kleiner ist als der überstand der Stichelspitze gegenüber dem Distanzglied. Letzteres kann vorzugsweise eine den Schaft des Stichels umgebende Schutzhülse sein.

Ein Ausführungsbeispiel der Erfindung wird nachstehend anhand der Zeichnung näher erläutert. Es zeigen:
- Fig. 1: eine Draufsicht auf eine Schablone mit einer aus Buchstaben und Zahlen bestehenden Kennzeichnung, welche bei einem bestimmten Kraftfahrzeug auf mehreren oder allen Fahrzeugscheiben angebracht werden soll;
- Fig. 2: einen vereinfachten Längsschnitt durch einen für die Zwecke der Erfindung geeigneten Gravierstichel während des Gravierens durch eine Schablone gemäß Fig. 1.

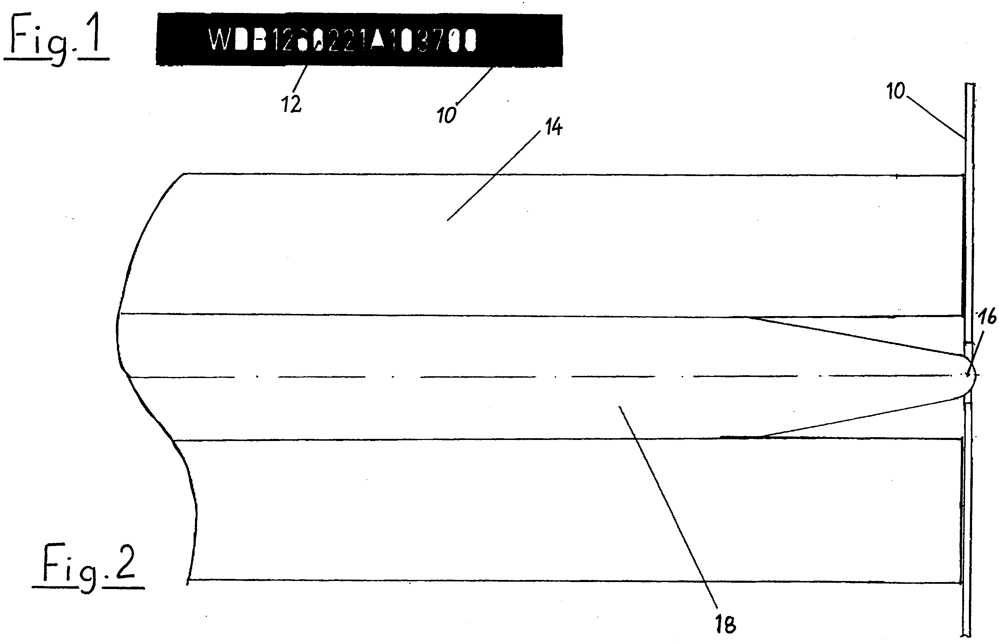

Die in Fig. 1 gezeigte Schablone ist im Beispielsfall ein Stahlband 10 mit einer Länge von 100 mm, einer Breite von 13 mm und einer Dicke von 0,1 mm. Darin ist in Form von Durchbrechungen die Fahrgestellnummer eines Kraftfahrzeugs eingearbeitet. Die Buchstaben haben im Ausführungsbeispiel eine Höhe von 5 mm. Sie bilden insgesamt eine mit 12 bezeichnete Kennzeichnung, die unter Zuhilfenahme der Schablone 10 auf mehrere oder alle Scheiben eines Kraftfahrzeugs übertragen werden soll.

Erfindungsgemäß wird die Kennzeichnung 12, die auch eine beliebige andere Form in einer flachen Schablone aus einem anderen Material, wie z. B. Leichtmetall oder Kunststoff, haben kann, in die Scheiben des Kraftfahrzeugs eingraviert. Zu diesem Zweck wird die Schablone 10 an der jeweils zu gravierenden Stelle flach gegen die Glasscheibe angedrückt oder mit einem leicht lösbaren Kleber vorübergehend angeheftet, und es folgt dann der in bekannter Weise mit einem Gravierstichel auszuführende Graviervorgang entlang den durch die Schablone vorgegebenen Linien der Kennzeichnung 12. Die Fig. 2 zeigt in 20-facher Vergrößerung nur die von einer Schutzhülse 14 umgebene Spitze 16 des Gravierstichels 18. Diese besteht aus schlagfestem Hartmetall oder synthetischem polykristallinen Diamant und ist zusammen mit der fest mit ihr verbundenen Schutzhülse 14 in das Spannfutter eines elektrisch betriebenen Graviergeräts eingesetzt. Solche Geräte arbeiten nach dem elektromagnetischen Schwingankersystem mit 100 axialen Schwingungen des Stichels pro Sekunde und sind z. B. unter der Bezeichnung VIBROGRAV, Modell 491 von der Firma Hugo Altstreoten GmbH, 5020 Frechen 4 erhältlich. Die Graviergeräte sind verhältnismäßig klein und lassen sich mit einer Hand wie ein Schreibgerät führen. Man erreicht damit praktisch jede Stelle auf den Kraftfahrzeugscheiben, wo eine Kennzeichnung zweckentsprechend angebracht werden kann.

Wie aus Fig. 2 hervorgeht, steht die kegelförmige Spitze 16 des Stichels 18, der einen Durchmesser von 1,5 mm hat, nur 0,15 mm über das vordere Ende der Schutzhülse 14 vor. Da die Schablone 10 eine Dicke von 0,1 mm hat, ragt beim Graviervorgang die Stichelspitze 16 höchstens 0,05 mm durch die Schablone 10 hindurch, d. h. die Eindringtiefe der am Ende mit einem Radius von 0,1 mm abgerundeten Stichelspitze 16 in das Glas ist auf 0,05 mm begrenzt.

Nachdem sämtliche zu gravierenden Scheiben eines Kraftfahrzeugs mit derselben Schablone 10 graviert worden sind, wird diese vorzugsweise vernichtet, um Mißbrauch vorzubeugen. Über die gravierten Stellen kann ein dunkler, durch entsprechende Wahl des Klebers praktisch nicht entfernbarer Aufkleber gesetzt werden, der einerseits die Sichtbarkeit der eingravierten Linien verbessert, andererseits potentielle Diebe deutlich auf die Sicherung hinweist.

## Patentansprüche

1. Verfahren zur Diebstahlsicherung von Kraftfahrzeugen durch Einschneiden einer Kennzeichnung in die Scheiben, wobei eine Schablone (10) mit der Kennzeichnung (12) hergestellt wird und diese mit einem Gravierwerkzeug durch die Schablone (10) hindurch in die Kraftfahrzeugscheiben eingraviert wird, **dadurch gekennzeichnet**, daß als Gravierwerkzeug ein motorische vibrierend angetriebener Gravierstichel (18) benutzt wird und die Tiefe der Gravur durch Anlage eines mit dem Gravierstichel (18) oder dessen Führung verbundenen Distanzglieds (14) gegen die Schablone (10) auf weniger als 0,1 mm begrenzt wird.

2. Verfahren nach Anspruch 1, **dadurch gekennzeichnet**, daß die Tiefe der Gravur auf etwa 0,05 mm begrenzt wird.

3. Verfahren nach Anspruch 1 oder 2, **dadurch gekennzeichnet**, daß die Breite einer Gravurlinie etwa 0,3 mm beträgt.

4. Verfahren nach einem der Ansprüche 1 bis 3, **dadurch ge****kennzeichnet**, daß mittels derselben Schablone (10) mehrere Scheiben eines Kraftfahrzeugs graviert werden.

5. Verfahren nach einem der Ansprüche 1 bis 4, **dadurch ge****kennzeichnet**, daß die Kennzeichnung (12) außer in die Scheiben auch in wenigstens ein metallisches Teil des Kraftfahrzeugs eingraviert wird.

6. Verfahren nach einem der Ansprüche 1 bis 5, **dadurch gekennzeichnet**, daß die Schablone (10) nach dem Gravieren der Scheiben zerstört wird.

7. Verfahren nach einem der Ansprüche 1 bis 6, **dadurch gekennzeichnet**, daß die in die Scheiben eingravierten Kennzeichnungen mit einem nicht entfernbaren, dunklen Aufkleber überklebt werden.

8. Vorrichtung zur Durchführung des Verfahrens nach einem der Ansprüche 1 bis 7, **dadurch gekennzeichnet**, daß sie aus einem motorisch axial vibrierend antreibbaren Stichel (18), dessen Spitze (16) über ein mit ihm oder seiner Führung verbundenes Distanzglied (14) vorsteht, und einer mit dem Stichel (18) zusammenwirkenden Schablone (10) besteht, deren Dicke um die Graviertiefe kleiner ist als der Überstand der Stichelspitze (16) gegenüber dem Distanzglied (14).

9. Vorrichtung nach Anspruch 8, **dadurch gekennzeichnet,** daß das Distanzglied (14) eine den Schaft des Stichels (18) umgebende Schutzhülse ist.
